# EUROPEAN PATENT SPECIFICATION

(11) **EP 2 880 284 B1**
(45) Date of publication and mention of the grant of the patent: **11.12.2019**
(21) Application number: 13737933.5
(22) Date of filing: 01.07.2013
(51) Int. Cl.: F02C 7/143

(54) **HEAT EXCHANGER FOR AN INTERCOOLER**
WÄRMETAUSCHER FÜR EINEN LADELUFTKÜHLER
ÉCHANGEUR DE CHALEUR POUR REFROIDISSEUR INTERMÉDIAIRE

(30) Priority: 30.07.2012 US 201213561627
(43) Date of publication of application: 10.06.2015
(73) Proprietor: General Electric Company, Schenectady, NY 12345 (US)
(72) Inventor: DE BARROS, Ian Alexandre, Araujo, West Chester, OH 45069 (US); STORAGE, Michael, Ralph, Beavercreek, OH 45434 (US)
(74) Representative: Openshaw & Co.
(86) International application number: PCT/US2013/048844
(87) International publication number: WO 2014/022046

(56) References cited:
- EP-A2- 0 292 127
- EP-A2- 1 916 399
- WO-A1-2005/075057
- WO-A1-2011/030181
- WO-A2-2010/099535
- US-A- 3 849 095
- US-A- 5 678 408
- US-A1- 2008 289 809

## Description

### BACKGROUND

Present embodiments relate generally to heat exchangers. More specifically present embodiments relate to a heat exchanger intercooler which may conform to various duct shapes, reduces footprint of current intercooler systems and may be installed inline with the turbine shaft or maybe offset from the turbine axis.

In a gas turbine engine for example, air is pressurized in a compressor and mixed with fuel in a combustor for generating hot combustion gases which flow downstream and expand through turbine stages. These turbine stages extract energy from the combustion gases during the expansion the pressure of the combustion gas is reduced. The combustion gas may continue through multiple low stage turbines. One or more turbine shafts connects to the one or more compressor stages to operate the compressor.

Turbine engines are utilized generally in the power industry to create energy which is utilized in communities' residential and commercial use. These turbine systems may utilize a heat exchanger intercooler in order to cool temperature of air passing through the turbine engine during the power generation process. An intercooler is a mechanical device used to cool a fluid, including liquids or gasses, between stages of a multi-stage compression process, typically a heat exchanger that removes heat. They are used in many applications, including air compressors for example of a turbine engine, to improve their volumetric efficiency by increasing intake air charge density through nearly isobaric (constant pressure) cooling.

There are various difficulties with known intercooler packages or systems. For example, in power generation industry, the intercoolers utilized are extremely large, expensive and difficult to transport.

It would be desirable to improve aerodynamics and packaging of the heat exchanger intercooler if such systems were placed in line with the turbine so as to improve air performance therein. This would eliminate the need for large areas or real estate for existing intercoolers. Additionally, since the ducting utilized to direct flow to the intercooler is extremely expensive, the cost of the power generation equipment would be reduced.

Additionally, heat exchangers of current intercooler systems utilize welded or brazed fin connections to structures wherein fluid may pass through for cooling. The process of brazing multiple fins along the fluid carrying ducts is time consuming tedious and very expensive for manufacturing.

Additionally, it would be desirable to eliminate the need for brazing of fins within the intercooler so as to improve manufacturing and installation of such structure.

EP 1916399 A2 discloses a heat exchanger assembly for a gas turbine engine. WO 2010/099535 A2 discloses a heat exchanger which includes a large number of small, closely-spaced modules. US 2008/289809 A1 discloses a heat exchanger having an aluminum main body.

### SUMMARY

The invention is set out in the appended set of claims. In the following description, anything which falls outside the scope of the appended set of claims is to be understood as an example useful for understanding the invention.

### BRIEF DESCRIPTION OF THE ILLUSTRATIONS

The above-mentioned and other features and advantages of these exemplary embodiments, and the manner of attaining them, will become more apparent and the heat exchanger intercooler feature will be better understood by reference to the following description of embodiments taken in conjunction with the accompanying drawings, wherein:
FIG. 1 is an isometric view of an in-line heat exchanger;
FIG. 2 is an isometric layout of a power plant configuration with an inline heat exchanger intercooler;
FIG. 3 is a plan view of the power plant of FIG. 1 with an alternative off engine configuration for the heat exchanger intercooler;
FIG. 4 is an isometric view of a heat exchanger intercooler.
FIG. 5 is an isometric view of a segment of the heat exchanger.
FIG. 6 is a side section view of the heat exchanger intercooler.
FIG. 7 is a side section view of an alternative heat exchanger intercooler.
FIG. 8 is a side section view of a further alternative heat exchanger intercooler.
FIG. 9 is an isometric view of the heat exchanger showing a modular design.
FIG. 10 is an isometric view of an alternate heat exchanger showing an alternate modular design.
FIG. 11 is a isometric view of a bifurcation of the heat exchanger intercooler which allows for thermal expansion and contraction.
FIG. 12 is a side section view of the intercooler with one embodiment of a water extraction device;
FIG. 13 is a detail section view of the water extraction device of FIG. 11
FIG. 14 is a side section view of an exemplary intercooler with an alternate water extraction embodiment.

### DETAILED DESCRIPTION

Reference now will be made in detail to embodiments provided, one or more examples of which are illustrated in the drawings. Each example is provided by way of explanation, not limitation of the disclosed embodiments. In fact, it will be apparent to those skilled in the art that various modifications and variations can be made in the present embodiments without departing from the scope of the disclosure. For instance, features illustrated or described as part of one embodiment can be used with another embodiment to still yield further embodiments. Thus it is intended that the present invention covers such modifications and variations as come within the scope of the appended claims.

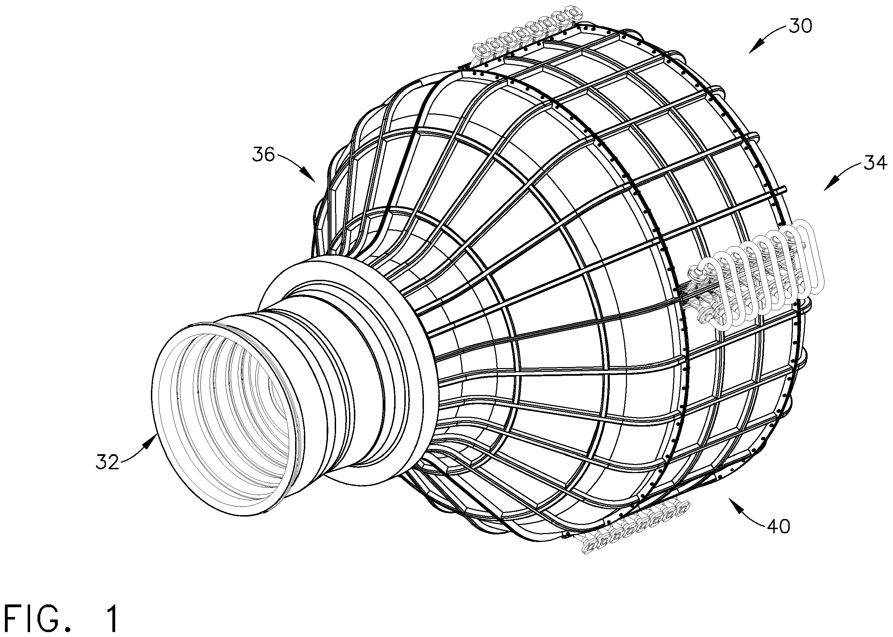

Referring to FIGS. 1-14, various embodiments of a gas turbine engine are depicted having a duct conforming fin heat exchanger intercooler. The intercooler allows for in line, or off-engine, installation with the turbine engine and has features which reduces costs of manufacturing, installation and costs associated with installation, such as property costs and shipping related costs. Other uses are well within the scope of this disclosure.

The terms fore and aft are used with respect to the engine axis and generally mean toward the front of the turbine engine or the rear of the turbine engine in the direction of the engine axis, respectively. The term radially is used generally to indicate a direction perpendicular to an engine axis.

Referring initially to FIG. 1, an isometric view of a volumetric duct conforming fin heat exchanger intercooler 30 is depicted. The intercooler 30 is utilized in a power plant for power generation or alternatively the structure may be configured for use in aviation or other areas utilizing gas turbine engines. The intercooler 30 includes an inlet end 32 and an outlet end 34 extending between the inlet and outlet is a housing 36 wherein a heat exchanger 40 is disposed. The intercooler 30 is utilized to cool air in compression stages before engaging the turbine structures utilized in power generation for other processes wherein a gas turbine engine is utilized.

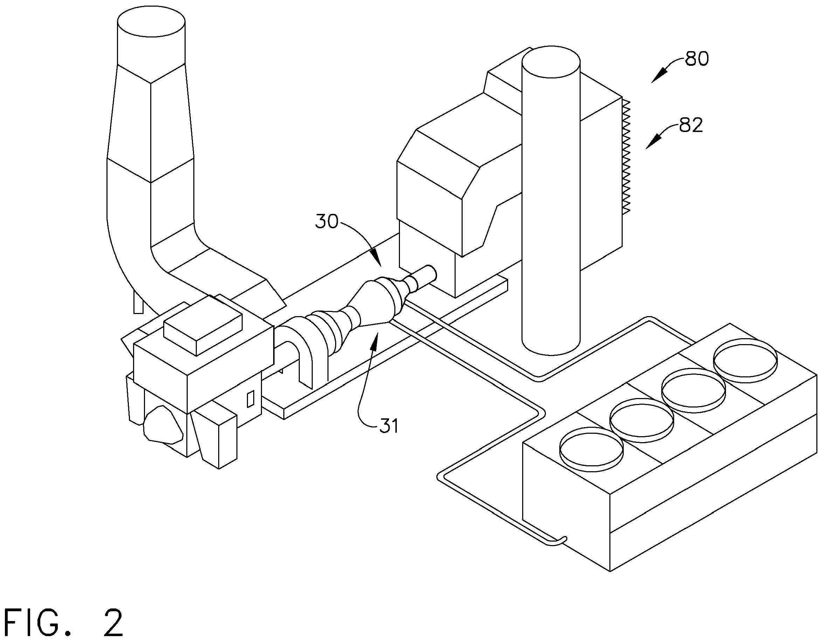

Referring now to FIG. 2, an isometric layout is shown of typical plant having a power generation turbine engine wherein a heat exchange intercooler 30 may be utilized. In the exemplary configuration, the embodiment provides that the intercooler 30 is disposed in line with the turbine shaft axis for power generation. The heat exchanger intercooler 30 is positioned in line with the axis of the compressor and turbine structure of the exemplary power plant depicted. The advantage of such configuration, as previously noted, is that the airflow being cooled may be done so inline (31), i.e. aligned with the turbine shaft, and does not have to be moved off-alignment (131) of the turbine and compressor system. This reduces the tremendous cost associated with the duct typically required for this task. Additionally, the intercooler 30 has a smaller footprint than existing intercooler systems and therefore less plant property is needed to position the intercooler 30.

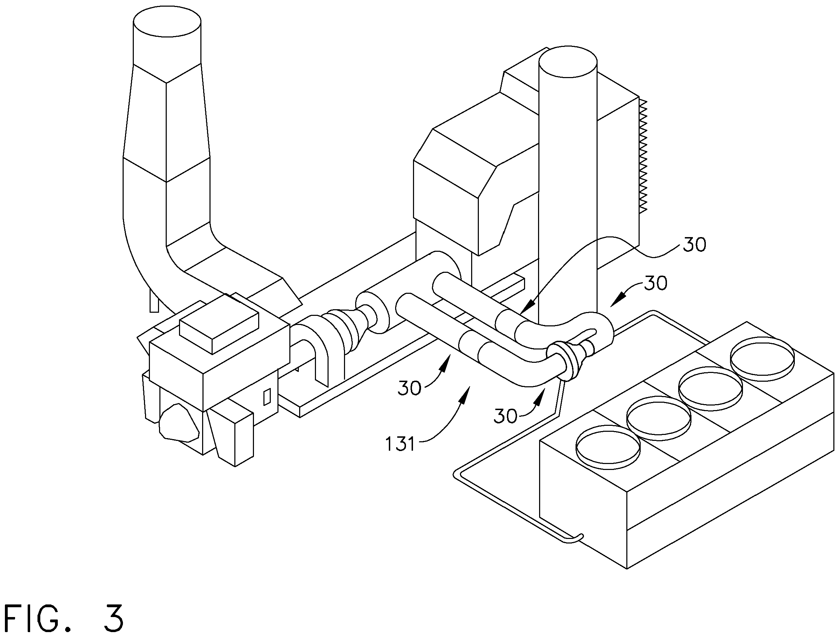

Referring to FIG. 3, an alternative embodiment is depicted wherein the intercooler 30 may be positioned in various locations. Although three intercoolers 30 are depicted, these may be used individually with a system in general and therefore the figure depicts various locations that the intercoolers 30 may be disposed. The figure should not be construed to require three separate intercoolers utilized. In the embodiment of FIG. 3, the intercoolers 30 are depicted off line or off axis from the compressor and turbine axis of the power plant. The structure may be disposed in either of the two ducts traditionally utilized with known intercooler designs or may be positioned in replacement of known intercooler designs at ends of the ducts shown. The ducts may be circular or other geometrically shaped cross-sections and further may be straight ducts or curved. Thus the heat exchanger is duct conforming in both the in line and the off axis designs.

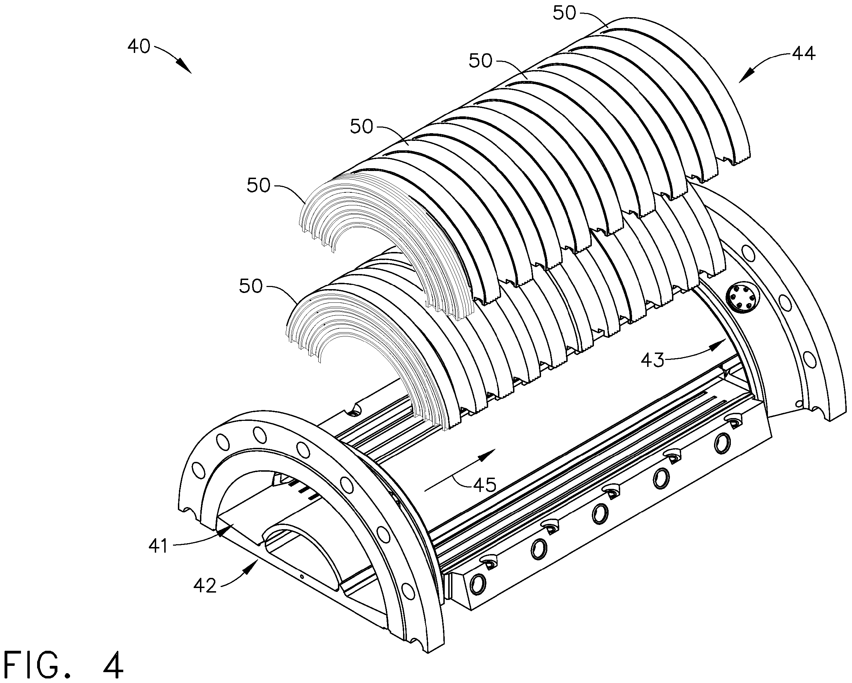

Referring now to FIG. 4, an isometric view of the exemplary heat exchanger 40 is depicted. The heat exchanger 40 is disposed within the intercooler 30 as previously described and an airflow passes over an outside of the heat exchanger 40 to cool the airflow or remove heat from a fluid flow within the heat exchanger 40. The heat exchanger 40 has an inlet end or face 41, an outlet end or face 43 and a passageway 45 therebetween. The heat exchanger 40 is formed of a plurality of segments 50 which extend between an axially forward end 42 and an axially aft end 44. In addition to extending the segments 50 in an axial direction, the segments 50 are stacked on top of one another in a radial direction to increase the radial dimension of the heat exchanger 40. Thus, the heat exchanger 40 is formed of annular ring sections or segments which span a flow duct and allowing penetration flow area for heat exchange. The segments 50 laid in the radial direction provide for a cylindrical mesh which allows heat transfer as air flows through the heat exchanger 40. The heat exchanger of the embodiment shown is generally cylindrical however other shapes may be utilized to conform the heat exchanger to a duct wherein the exchanger 40 is positioned. For example, the structure may be tapered in a radial direction across an axial length. Additionally, other geometric shapes than the circular cross section depicted may be also utilized. Additionally, the heat exchanger 40 may be curved to match a curved axis of a curved duct, as previously noted.

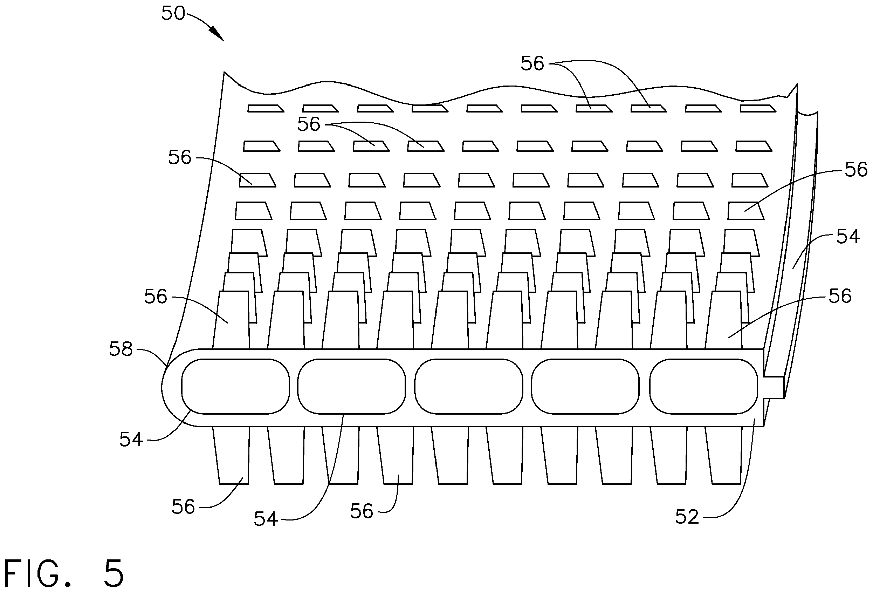

Referring now to FIG. 5, one segment 50 is depicted. The segment 50 includes a body 52 which extends circumferentially and has an axial length. Across the axial length are a plurality of flow paths or channels 54 which extend in a circumferential direction allowing flow of for example, oil needing cooling or alternatively, a cooling fluid utilized to reduce air temperature moving through the heat exchanger 40. The segment 50 also includes a plurality of fins 56 extending in a radial direction. The fins 56 are formed in a skiving process from a single piece of material which also defines the body 52. By skiving the fins 56, the process of brazing multiple fins to the body 52 is eliminated and therefore the costs for producing the segments 50 may be reduced. The body structure 52 is generally extruded and in a subsequent process the skiving step carves the fins 56 from the single piece of metal. The fins 56 may be carved in one or more directions, for example as shown in the axial and circumferential directions. Alternatively, the fins 56 may extend at some angle similar to a helical fin structure as well.

Additionally, the fins 56 are shown extending radially from the body so as to extend outwardly therefrom the body 52. However, according to other embodiments fins 56 may be carved so as to extend either radially inward or both radially inward and outward.

As described earlier, the body 52 includes a plurality of flow paths or channels for a fluid to be cooled or a fluid to cool the airflow. The axially forwardmost flow channel 54 alternatively according to one embodiment may be a blank. That is to say, the forwardmost flow path may not receive any fluid flow therein so as to preclude fluid leakage from foreign objects entering the heat exchanger 40, also referred to as foreign object damage. Additionally, at this forward end of the segment 50, a leading edge 58 of the body 52 is curved to improve aerodynamics of the segment 50. Likewise, the leading edge may have an increased material thickness to decrease damage from foreign object in the air flow path encountering the heat exchanger 40. The trailing edge may alternatively be curved. Various other shapes or arrangements may be utilized for a leading edge to improve overall aerodynamics of the entire assembly of the heat exchanger 40.

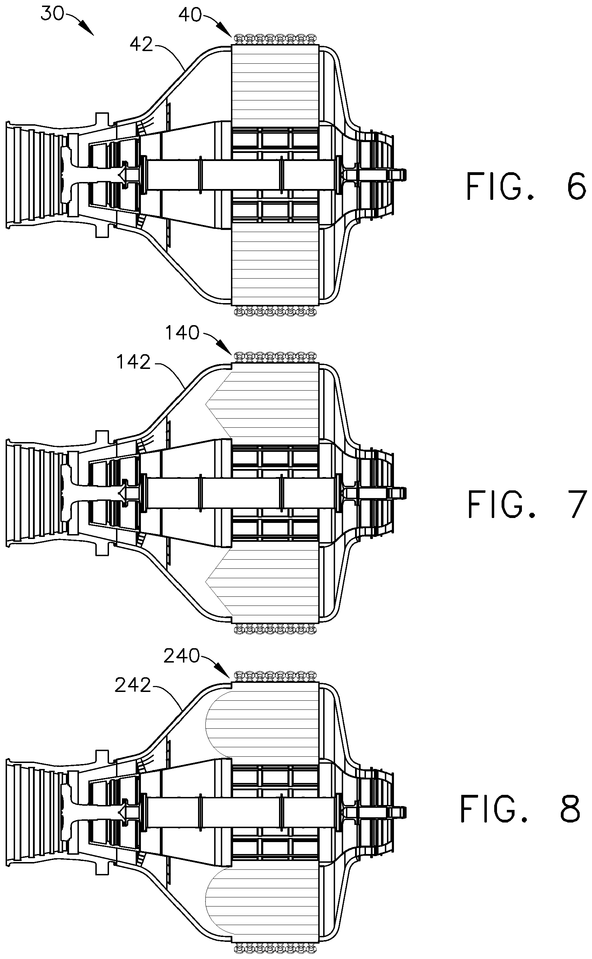

Referring now to FIGS. 6-8, the various figures depict alternate profiles that the heat exchanger 40 may have within the intercooler 30. Referring first to FIG. 6, a heat exchanger 40 is depicted with a rectangular profile when viewed in side section. This rectangular shape is created in part by the face shape at the forward end 42 of the exchanger 40, as well as the aft end of the exchanger. The forward end 42 may be varied as described in alternate embodiments.

Referring now to FIG. 7, an alternative geometric shape is depicted. According to this embodiment, a forward end 142 of a heat exchanger 140 utilizes tapered forward face to form a polygon shaped profile. Such shape may be desirable to improve aerodynamics or alternatively limit damage from object within the flow stream. According to a further embodiment, and with reference to FIG. 8, the heat exchanger 240 may include a leading profile 242 which is torus shaped. Again, this may be done for various reasons included but not limited to aerodynamics and limiting damage caused by material in the flow path.

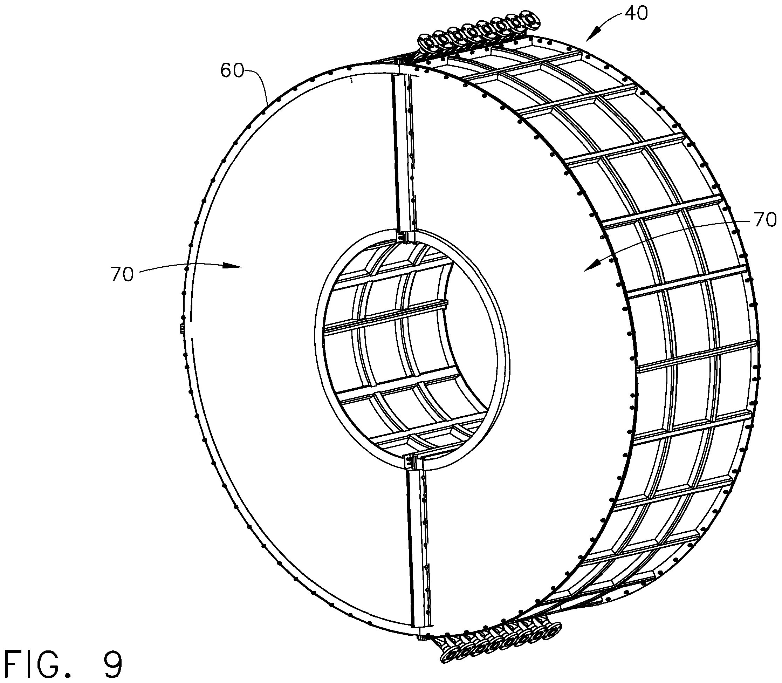

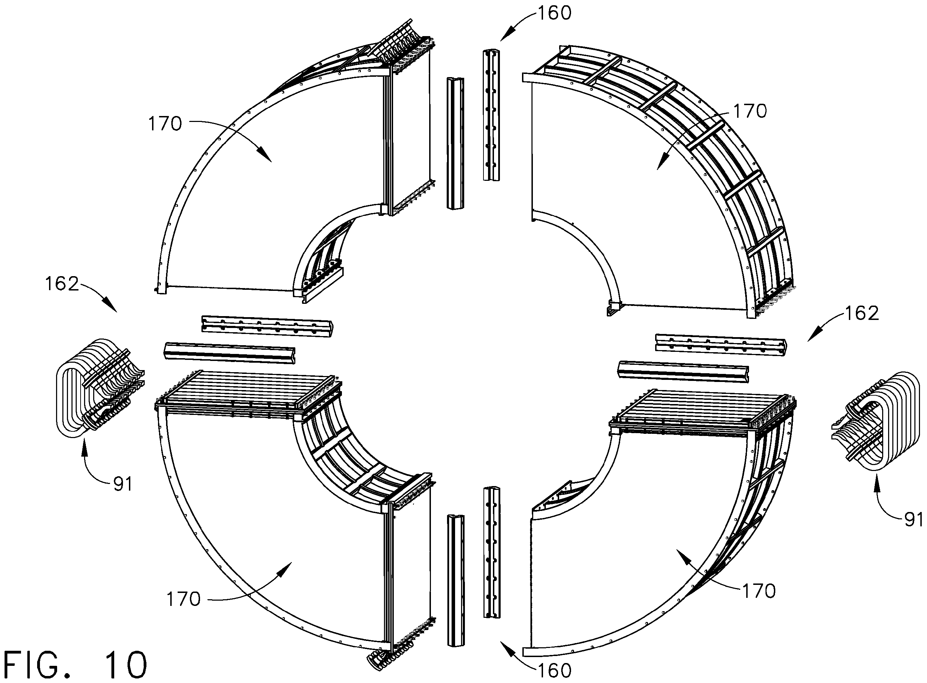

Referring now to FIG. 9, the heat exchanger 40 may be formed in various modular designs or shapes. In the embodiment depicted, a structure is shown with a split 60 extending radially through the exemplary heat exchanger 40 to allow the structure to be constructed in two modules 70 and connected together. However, alternate embodiments may be formed wherein multiple cut lines are utilized to form more modular shape without limiting function of the structure. For example, according to the embodiment shown in FIG. 10, the heat exchanger has four modular sections 170 defined by two linear splits 160-162 to define the quadrants. However, these embodiments may be formed in various shapes with various axial and/or angular lengths at the radially outer surface of the modules.

Referring again to FIG. 2, the plant layout is shown in isometric view with a filter house 80 at the forward end of the process. The filter house takes in air through an inlet 82 and filters out some material for air is directed to a low pressure compressor and subsequently to the inner cooler 30. The structure of the heat exchanger may alternatively be used in the filter house according to an alternate embodiment. In this embodiment, the body 52 is not curved circumferentially but may instead be flat or may be formed to provide various geometric shapes. The body may be supplied with a fluid to either cool the air if the power plant is in a high temperature and high humidity environment. According to an alternate embodiment a warming fluid may be utilized if the power plant is located in an extremely low temperature environment and the temperature of the incoming air needs to be raised. Thus, the heat exchanger may act as a preheater or a precooling portion within the filter house 80 at some position prior to the low pressure compressor step of power generation. Optionally, water may be removed from the air entering the filter by natural condenation due to cooling of the air or further opational methods described further herein. According to some embodiments of the instant disclosure, the body structure of the segments may be used to provide heating fluid for preheating of air coming into the inlet 82. Other segments may be utilized for cooling fluid as previously described if the power plant is located in an extremely high temperature or high humidity environment. According to other embodiments, the totality of segments may be used for either heating or cooling.

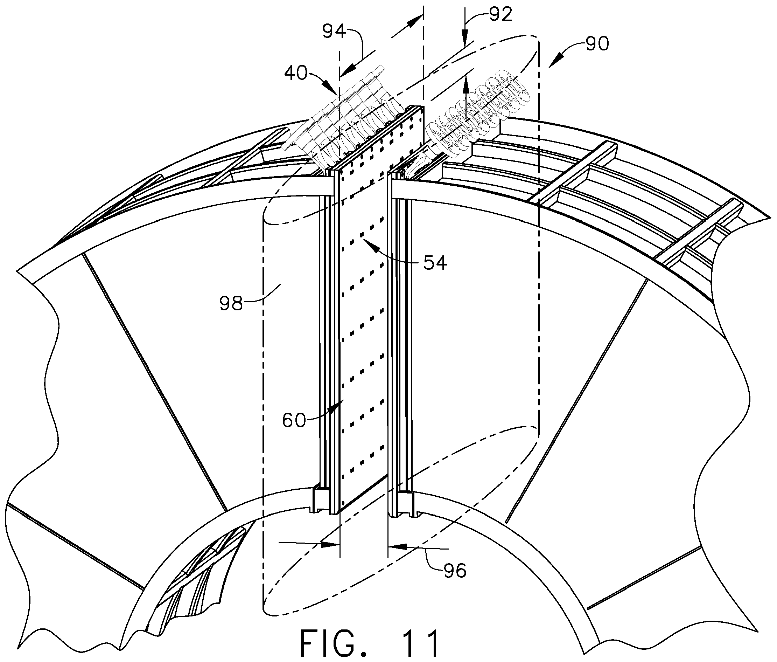

Referring now to FIG. 11, an isometric view of one exemplary heat exchanger 40 is shown. A bifurcation 90, shown in broken line for clarity, is disposed at each of the splits 60 which define the modular portions of the heat exchanger 40. The bifurcations 90 inhibit airflow from passing over the structures joining the modules of the heat exchanger 40. The bifurcations 90 therefore inhibit pressure losses which would otherwise occur. The bifurcations 90 also have a second function in that the bifurcations 90 allow for thermal growth of the heat changer 40. From start up to normal operation, the heat exchanger 40 will grow radially 92 and axially 94. Additionally, the modules will increase in size circumferentially 96 so that the splits 60 or 160, 162 will increase in dimension. This is due in part to a radial and axial temperature distribution through the heat exchanger 40. The bifurcation 90 compensates for, or accommodates, the thermal expansion of the heat exchanger 40 during operation. The bifurcation 90 depicted has an aerodynamic profile 98 to aid air flow movement structures joining the modules. Additionally, the bifurcation 90 will accept connections from fluid sources and/or house piping for such fluid wherein the fluid will pass through the heat exchanger 40.

As depicted in FIG. 11, the view shows how fluid moves into the split 60 and then may move circumferentially through ducts or channels 54 of the segments 50 defining the modules. The fluid may make a single pass from one split to another. The fluid may also move across a split 60 by way of jumper tubing 91. In a further alternative, the fluid may exit after an incomplete revolution, or may complete at least one or more full or partial revolutions about the heat exchanger before exiting through at one of the splits. One skilled in the art will understand that the arcuate distance traveled by fluid through the heat exchanger 40 may vary based on the radius of the heat exchanger and the amount of cooling needed either for the fluid or for the air passing through the heat exchanger 40.

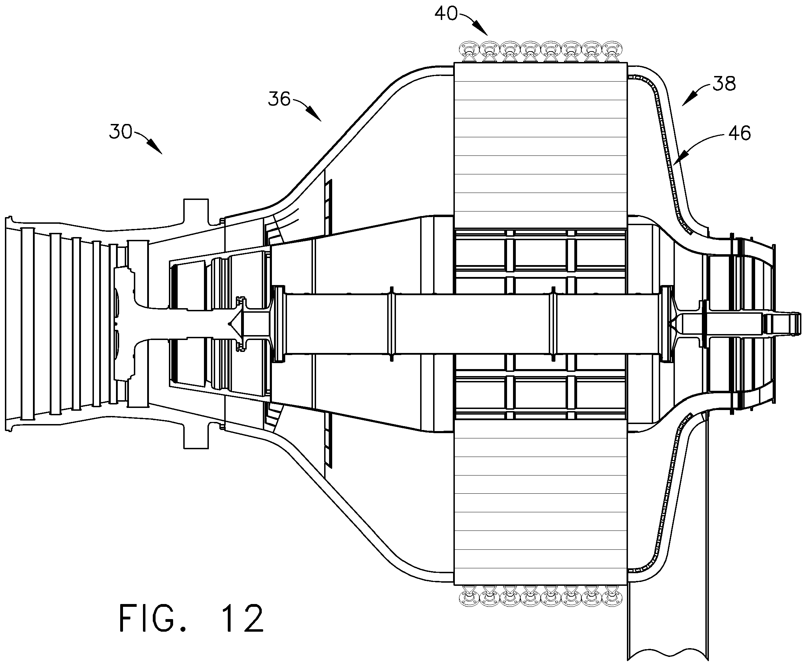

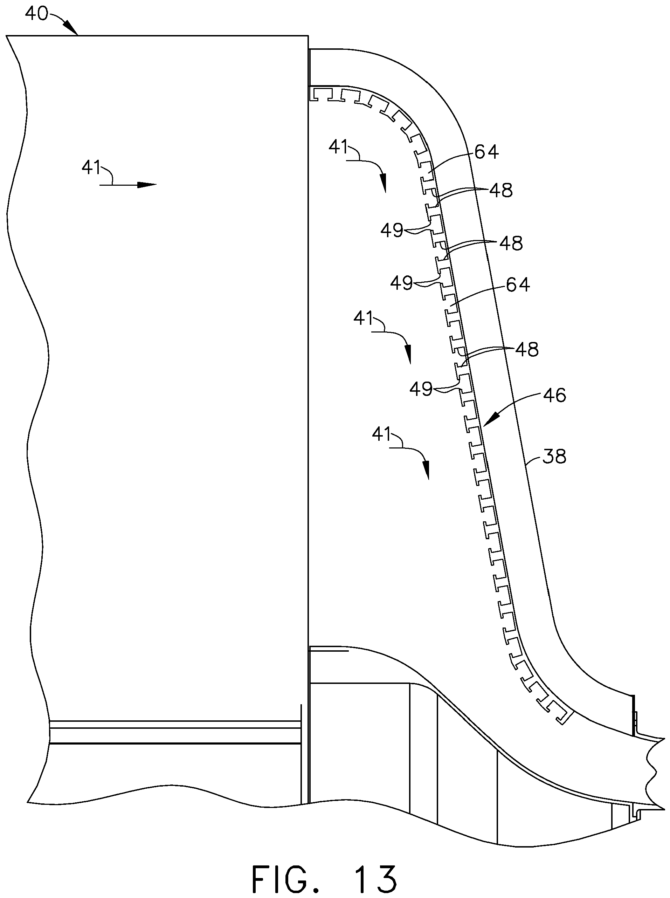

Referring now to FIGS. 12 and 13, side section views of the intercooler 30 are depicted including the heat exchanger 40. The flow path passing through the heat exchanger 40 engages a rear or aft wall 38 of the housing 36. The aft wall 38 has an interior surface including a water extraction apparatus 46 (FIG. 12) which extends circumferentially about the axis of the intercooler 30. The apparatus 46 includes a baffle with a plurality of risers 48 extending generally perpendicular to the baffle. The baffle may be flat or may be curvilinear to match the contour of the rear wall 38. The risers 48 may be exposed at some angle other than 90 degrees to the baffle but in general create a plurality of channels 64. Heads 49 are located at ends of the risers 48 opposite the baffle and reduce the opening size of the channels 64. This aids in retaining water that is captured within the channels 64. An absorbant material may be positioned on inner surface of the channels 64 and/or along the outer surface of the heads 49 to retain water droplets and prevent them from being re-entrained in the airflow passing adjacent the water extraction device 46. The instant embodiment utilizes heads 49 that are generally parallel to the baffle such that the head 49 and the riser 48 create T-shaped cross-section. However, alternative shapes may be utilized such as, for example, a Y-shaped cross section or other designs. In any event the channel 64 is wider than a neck created between ends of the heads 49. The water extraction apparatus 46 is located along the rear surface 38 of the inner cooler 30 as depicted in FIG. 12.

In operation, air flow moves through the inner cooler and passes through the heat exchanger 40. After moving through the heat exchanger 40, the air flow turns rapidly and engages the extraction apparatus 46 located along the rear wall 38 of housing 36. The air flow changes direction rapidly due to change in the profile housing and shape of the housing 36. However, momentum of the water particles carries along the previously defined path so that the water particles are carried into the extraction device 46 and collected in the channels 64. The water drains through these channels 64 to a desired extraction point and may be collected or dumped as appropriate from the inner cooler 30. The collection or extraction point may be at the bottom of the extraction device 46 or the intercooler 30 so that gravity moves the collected water out of the system.

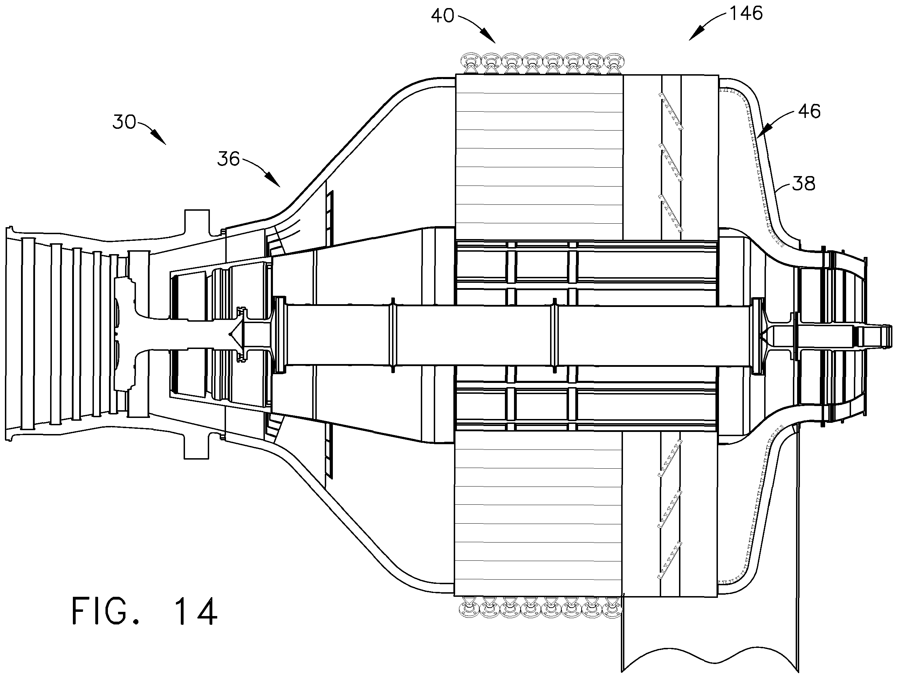

Referring to FIG. 14, an alternate embodiment is utilized wherein the water extraction device 146 is located between the heat exchanger 40 and the aft wall 38 of the housing 36. The extraction apparatus 146 sees air flow from the heat exchanger and engages the air flow capturing the water particles out of the air as previously described as the airflow is forced to turn. Channels defined by the apparatus 146 collect the water and move the water to a gathering location or discharge point where it is removed from the intercooler 30. According to this alternate embodiment multiple extraction devices 146 may be located between the heat exchanger 40 and the rear wall 38. Additionally, a combination of the embodiment of FIGS. 12 and 14 may be utilized with one or more extraction apparatuses 146, located immediately after the heat exchanger 40 and additionally extraction devices are located along the rear wall 38.

While multiple inventive embodiments have been described and illustrated herein, those of ordinary skill in the art will readily envision a variety of other means and/or structures for performing the function and/or obtaining the results and/or one or more of the advantages described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims, inventive embodiments may be practiced otherwise than as specifically described. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Examples are used to disclose the embodiments, including the best mode, and also to enable any person skilled in the art to practice the apparatus and/or method, including making and using any devices or systems and performing any incorporated methods. These examples are not intended to be exhaustive or to limit the disclosure to the precise steps and/or forms disclosed, and many modifications and variations are possible in light of the above teaching.

All definitions, as defined and used herein, should be understood to control over dictionary definitions, definitions in documents incorporated by reference, and/or ordinary meanings of the defined terms. The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

## Claims

1. A heat exchanger assembly (40), comprising:
an axially forward face (41), an axially aft face (43) and a passageway (45) extending from said forward face to said rearward face, a plurality of circumferential segments (50) disposed about said passageway between said forward face and said rearward face;
each of said plurality of segments (50) formed of a single piece (52) of material having internal flow paths (54) extending in a circumferential direction;
said each segment having a plurality of fins (56) formed by skiving said single piece (52) of material thereby precluding a brazed connection of said fins;
said plurality of segments comprising segments stacked in a radially outwardly extending arrangement;
said plurality of segments comprising segments disposed adjacent one another in an axial arrangement;
wherein said flow paths (54) of said circumferentially adjacent segments are aligned in the circumferential direction.

2. The assembly (40) of Claim 1, said fins (56) extending in one of radial or axial direction.

3. The assembly (40) of Claim 1, said fins (56) extending at least one of radially inwardly or radially outwardly.

4. The assembly (40) of Claim 1, wherein an axial forward end of at least an axially forward segment (50) has an aerodynamically tailored leading edge (58).

5. The assembly (40) of Claim 1, wherein said forward face (41) has a geometric shape.

6. The assembly (40) of Claim 5, wherein said forward face (41) is one of tapered, curved or flat.

7. The assembly (40) of Claim 1, further comprising bifurcations allowing for thermal expansion in a radial and axial direction.

8. The assembly (40) of Claim 1, wherein said assembly is modular.

9. The assembly (40) of Claim 8, wherein said modular assembly is split in half.

10. The assembly (40) of Claim 8, wherein said modular assembly is split in quadrants.

11. The assembly (40) of Claim 1, further comprising a turbine shaft extending through said passageway (45).

12. A turbine engine comprising the assembly (40) of Claim 1, wherein said heat exchanger assembly is positioned within a duct offset from a turbine shaft.

## Patentansprüche

1. Wärmetauscherbaugruppe (40), Folgendes umfassend:
eine axial vordere Fläche (41), eine axial hintere Fläche (43) und einen Durchgang (45), der sich von der vorderen Fläche zu der hinteren Fläche hin erstreckt, wobei mehrere Umfangssegmente (50) um den Durchgang herum zwischen der vorderen Fläche und der hinteren Fläche eingerichtet sind;
wobei jedes der mehreren Segmente (50) aus einem einzigen Materialstück (52) ausgebildet ist, das innere Strömungswege (54) aufweist, die sich in einer Umfangsrichtung erstrecken;
wobei jedes Segment mehrere Rippen (56) aufweist, die durch Abschälen des einzelnen Materialstücks (52) ausgebildet sind, wobei dadurch eine hartgelötete Verbindung der Rippen verhindert wird;
wobei die mehreren Segmente Segmente umfassen, die in einer sich radial nach außen erstreckenden Anordnung gestapelt sind;
wobei die mehreren Segmente Segmente umfassen, die angrenzend aneinander in einer axialen Anordnung eingerichtet sind;
wobei die Strömungswege (54) der umlaufend angrenzenden Segmente in der Umfangsrichtung ausgerichtet sind.

2. Baugruppe (40) nach Anspruch 1, wobei die Rippen (56) sich in eine radiale oder axiale Richtung erstrecken.

3. Baugruppe (40) nach Anspruch 1, wobei die Rippen (56) sich radial nach innen und/oder radial nach außen erstrecken.

4. Baugruppe (40) nach Anspruch 1, wobei ein axial vorderes Ende wenigstens eines axial vorderen Segments (50) eine aerodynamisch angepasste Vorderkante (58) aufweist.

5. Baugruppe (40) nach Anspruch 1, wobei die vordere Fläche (41) eine geometrische Form aufweist.

6. Baugruppe (40) nach Anspruch 5, wobei die vordere Fläche (41) konisch, gekrümmt oder flach ist.

7. Baugruppe (40) nach Anspruch 1, ferner umfassend Verzweigungen, die eine Wärmeausdehnung in eine radiale oder axiale Richtung ermöglichen.

8. Baugruppe (40) nach Anspruch 1, wobei die Baugruppe modular ist.

9. Baugruppe (40) nach Anspruch 8, wobei die modulare Baugruppe in zwei Hälften geteilt ist.

10. Baugruppe (40) nach Anspruch 8, wobei die modulare Baugruppe in Quadranten geteilt ist.

11. Baugruppe (40) nach Anspruch 1, ferner umfassend eine Turbinenwelle, die sich durch den Durchgang (45) hindurch erstreckt.

12. Turbinenmotor, umfassend die Baugruppe (40) nach Anspruch 1, wobei die Wärmetauscherbaugruppe innerhalb eines Kanals von einer Turbinenwelle versetzt positioniert ist.

## Revendications

1. Ensemble échangeur de chaleur (40) comprenant:
une face avant axialement (41), une face arrière axialement (43) et une voie de passage (45) s'étendant depuis ladite face avant à ladite face arrière, une pluralité de segments périphériques (50) disposés autour de ladite voie de passage entre ladite face avant et ladite face arrière ;
chaque segment de ladite pluralité de segments (50) formés d'une seule pièce (52) de matériau présentant des trajets d'écoulement internes (54) s'étendant dans une direction périphérique ;
chaque dit segment présentant une pluralité d'ailettes (56) formées par drayage de ladite pièce unique (52) de matériau excluant une connexion brasée desdites ailettes ;
ladite pluralité de segments comprenant des segments empilés dans un agencement s'étendant vers l'extérieur radialement ;
ladite pluralité de segments comprenant des segments disposés adjacents l'un à l'autre dans un agencement axial ;
dans lequel lesdits trajets d'écoulement (54) desdits segments adjacents de façon périphérique sont alignés dans la direction périphérique.

2. Ensemble (40) selon la revendication 1, lesdites ailettes (56) s'étendant dans l'une des directions radiales ou axiales.

3. Ensemble (40) selon la revendication 1, lesdites ailettes (56) s'étendant au moins l'une vers l'intérieur radialement ou l'une vers l'extérieur radialement.

4. Ensemble (40) selon la revendication 1, dans lequel une extrémité avant axiale d'au moins un segment avant axialement (50) présente un bord d'attaque ajusté aérodynamiquement (58).

5. Ensemble (40) selon la revendication 1, dans lequel ladite face avant (41) présente une forme géométrique.

6. Ensemble (40) selon la revendication 5, dans lequel ladite face avant (41) est conique, incurvée ou plate.

7. Ensemble (40) selon la revendication 1, comprenant en outre des bifurcations permettant l'expansion thermique dans une direction axiale et radiale.

8. Ensemble (40) selon la revendication 1, dans lequel ledit ensemble est modulaire.

9. Ensemble (40) selon la revendication 8, dans lequel ledit ensemble modulaire est divisé en deux.

10. Ensemble (40) selon la revendication 8, dans lequel ledit ensemble modulaire est divisé en quadrants.

11. Ensemble (40) selon la revendication 1, comprenant en outre un arbre de turbine s'étendant à travers ladite voie de passage (45).

12. Turbine moteur comprenant l'ensemble (40) selon la revendication 1 dans lequel ledit ensemble échangeur de chaleur est positionné à l'intérieur d'un conduit décalé par rapport à un arbre de turbine.
